# EUROPEAN PATENT SPECIFICATION

(11) **EP 1 211 178 B1**
(45) Date of publication and mention of the grant of the patent: **17.01.2007**
(21) Application number: 01127455.2
(22) Date of filing: 27.11.2001
(51) Int. Cl.: B65B 19/04, B65B 19/22

(54) **Unit and method for transferring articles**
Vorrichtung und Verfahren zum Überführen von Gegenständen
Installation et procédé pour transférer des objets

(30) Priority: 30.11.2000 IT BO000699
(43) Date of publication of application: 05.06.2002
(73) Proprietor: G.D SOCIETÀ PER AZIONI, 40133 Bologna (BO) (IT)
(72) Inventor: Spatafora, Mario, 40100 Bologna (IT); Polazzi, Alberto, 40067 Rastignano (IT)
(74) Representative: Jorio, Paolo

(56) References cited:
- EP-A- 0 435 087
- EP-A- 0 438 763
- EP-A- 1 052 171
- US-A- 4 750 607
- US-A- 4 889 226
- US-A- 5 154 278

## Description

The present invention relates to a unit for transferring articles.

In particular, the present invention relates to a unit for transferring groups of cigarettes, to which the following description refers purely by way of example.

Groups of cigarettes are normally transferred from a group-forming hopper to a wrapping unit by a transfer unit comprising a conveyor with pockets for housing respective groups, and an ejecting device for expelling the groups from the respective pockets and transferring the groups to the wrapping unit. The conveyor is operated in steps to arrest a pocket at the ejecting device, which comprises an ejecting member which penetrates the pocket arrested in front of the ejecting device to expel the respective group. If the pocket and respective ejecting member are not perfectly aligned, the ejecting member, during the ejection stroke, damages the pocket and, at times, even the whole conveyor. The likelihood of this occurring is greater on more recent continuously-operated transfer units, in which the ejecting member is advanced in time with a respective pocket, and performs the ejection stroke, along a portion of the path travelled by the pocket. On continuously-operated transfer units, therefore, it is essential that each pocket and respective ejecting member be maintained perfectly aligned along said path portion.

EP1052171A1 discloses a method and device for feeding groups of cigarettes to a continuous wrapping line of a packing machine. On a continuously operating cigarette packing machine, a group of cigarettes is transferred from a pocket integral with an endless conveyor having at least one substantially straight portion to a first seat carried on an input wheel of a wrapping line and movable with respect to the input wheel by transferring the group axially from the pocket to a second seat, which is fed by an intermediate wheel along a portion of the endless conveyor and is movable with respect to the intermediate wheel; and by then orienting the first and second seats with respect to the respective wheels so that one of the first and second seats penetrates the other for a given time.

It is an object of the present invention to provide a unit and a method for transferring articles, and the structural elements of which are not damaged by any misalignment of the pocket and ejecting member.

According to the present invention, there are provided a unit and a method for transferring articles as recited in the attached claims.

A non-limiting embodiment of the present invention will be described by way of example with reference to the accompanying drawings, in which:
Figure 1 shows a section of a transfer unit in accordance with the present invention;
Figure 2 shows a side view, with parts removed for clarity, of the Figure 1 unit in a first operating position;
Figure 3 shows a larger-scale side view, with parts removed for clarity, of a detail of the Figure 1 unit;
Figure 4 shows a larger-scale view in perspective of a detail of the Figure 1 unit;
Figure 5 shows a side view, with parts removed for clarity, of the Figure 1 unit in a second operating position;
Figure 6 shows a side view, with parts removed for clarity, of the Figure 1 unit in a third operating position.

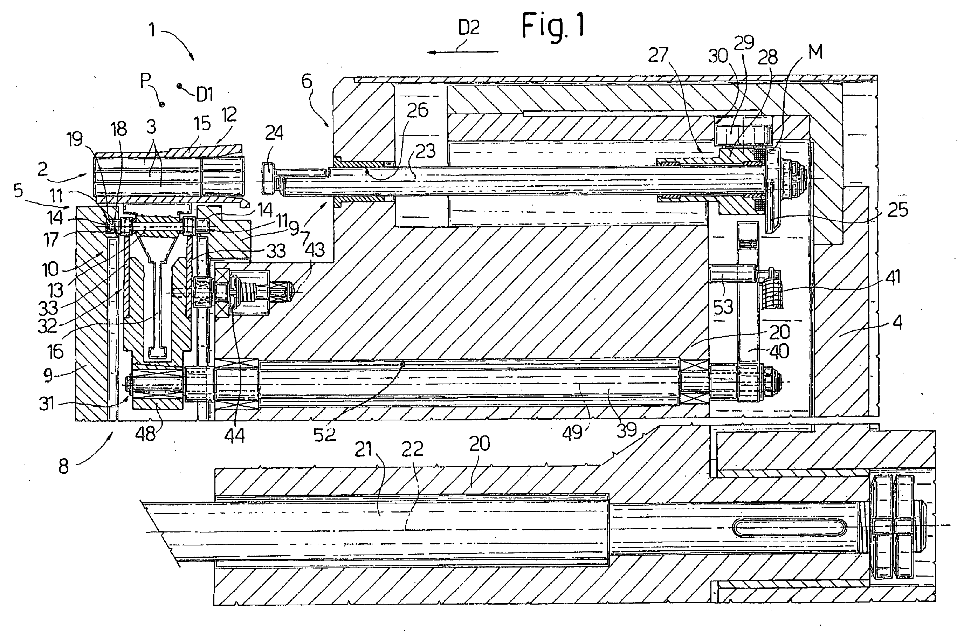

Number 1 in Figure 1 indicates as a whole a unit for transferring orderly groups 2 of cigarettes 3 along a given path P. Unit 1 comprises a frame 4, which supports a conveyor 5 for feeding groups 2 along path P in a direction D1 perpendicular to the Figure 1 plane, and an ejecting device 6 having six ejecting members 7, only one of which is shown in Figure 1. Each ejecting member 7 performs an ejection stroke, parallel to a direction D2 perpendicular to direction D1, between a rest position (Figure 1) and a work position (not shown in Figure 1) wherein ejecting member 7 interferes with path P of groups 2.

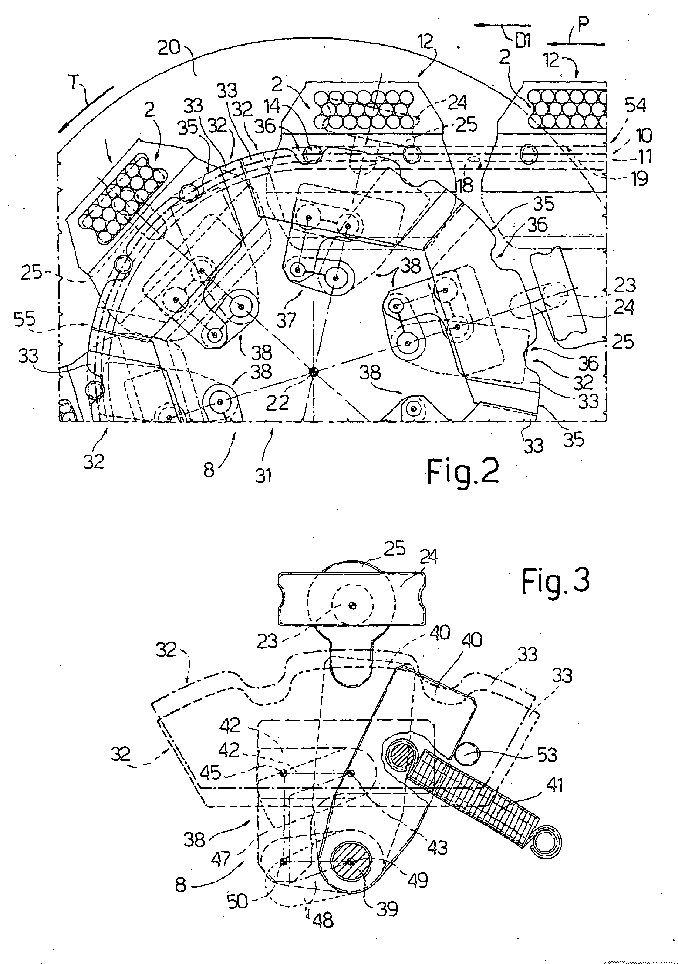

Unit 1 comprises a safety device 8 located between conveyor 5 and ejecting device 6, and which provides for determining, along a portion T (Figure 2) of path P, the position of each group 2 on conveyor 5 with respect to a respective ejecting member 7, and for preventing the ejection stroke of ejecting member 7 on determining misalignment of group 2 and respective ejecting member 7.

Conveyor 5 comprises a support 9 integral with frame 4 and in turn comprising two opposite, facing plates, and an endless track 10 defined by two facing positive cams 11 formed in the plates of support 9 and parallel to path P. Conveyor 5 also comprises a number of carriages 12, each of which comprises two axles 13 fitted on the ends with respective wheels 14, and an annular pocket 15 for housing a group 2. Each carriage 12 also comprises a ferromagnetic core 16 cooperating with a magnetic field induced along path P to feed carriage 12 along path P, while wheels 14 of each carriage 12 engage positive cams 11 to guide carriage 12 along path P. In other words, conveyor 5 provides for transferring carriages 12 along path P by means of a so-called linear motor not shown in Figure 1.

Each positive cam 11 comprises a lateral face 17, an inner face 18 perpendicular to lateral face 17, and an outer face 19 parallel to inner face 18, so as prevent carriage 12 from moving in the directions perpendicular to faces 17, 18 and 19.

Ejecting device 6 comprises a drum 20 integral with a shaft 21 rotating about an axis 22 parallel to direction D2; and said six ejecting members 7, which are equally spaced about axis 22. Each ejecting member 7 comprises a rod 23 parallel to direction D2; a head 24 located at the free end of rod 23 to expel group 2 from each pocket 15; and a plate 25 integral with the end of rod 23 opposite head 24. Rod 23 engages a guide 26 formed in drum 20, and is connected to a slide 27 comprising a sleeve 28, which surrounds rod 23, comprises a magnet M for connecting sleeve 28 to plate 25, and supports a roller 29 engaging a positive cam 30 formed in frame 4 and extending about axis 22. In other words, slide 27 is a drive member movable in direction D2, and provides for moving ejecting member 7 in direction D2 to perform the ejection stroke.

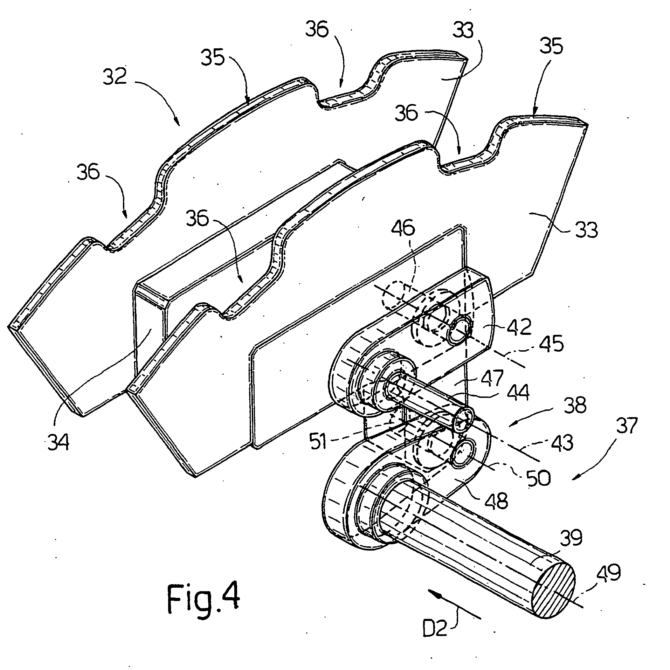

With reference to Figures 1 and 2, safety device 8 is fitted to drum 20 and comprises a wheel 31, which rotates about axis 22 and is defined by six adjacent sectors 32 equally spaced about axis 22. Each sector 32 is fitted to drum 20, is connected to a respective ejecting member 7, and, as shown more clearly in Figure 4, comprises two parallel, facing plates 33 connected by a fork 34. Each plate 33 comprises a curved outer edge 35, which is broken by two seats 36 which are actually recesses in plate 33; and the seats 36 of plates 33 of each sector 32 are aligned in twos in direction D2.

Each sector 32 is connected to drum 20 by a mechanism 37 comprising an articulated quadrilateral 38, a shaft 39 parallel to direction D2, an intercepting member 40, and a spring 41 connected at the ends to member 40 and drum 20. Articulated quadrilateral 38 comprises a lever 42, which is mounted to rotate about an axis 43 with respect to drum 20 by means of a shaft 44, and to rotate with respect to sector 32 about an axis 45 parallel to axis 43 by means of a shaft 46. Shafts 44 and 46 and respective axes 43 and 45 are parallel to direction D2 and located at opposite ends of lever 42.

Articulated quadrilateral 38 also comprises a rod 47; and a lever 48 integral with shaft 39, which extends along a respective axis 49 parallel to direction D2. Rod 47 connects lever 42 to lever 48, is fitted to lever 42 and sector 32 to rotate about axis 45 by means of shaft 46, and is fitted to lever 48 to rotate about an axis 50 of a shaft 51 parallel to direction D2.

With reference to Figure 1, shaft 39 is housed inside a seat 52 formed in drum 20, and is integral with lever 48 at one end and with intercepting member 40 at the opposite end. With reference to Figure 3, intercepting member 40 is anchored to spring 41, which positions intercepting member 40 resting against a stop 53 projecting from drum 20; and intercepting member 40 is movable, about axis 49, between a rest position shown by the continuous line in Figure 3, and a work position shown by the dash line in Figure 3. When positioning intercepting member 40 against stop 53, spring 41 keeps respective articulated quadrilateral 38 in a given position, and respective sector 32 in a first work position shown by the dash-and-dot line in Figure 3. When sector 32 is subjected to external force capable of overcoming the opposition of spring 41 and directed towards axis 22, sector 32 is moved into a second work position shown by the dash line in Figure 3, and intercepting member 40 is moved into the work position.

In other words, drum 20 supports six ejecting members 7 on one side, and, along the opposite side, six sectors 32, each of which is connected to a respective ejecting member 7 and is movable between a first work position wherein it centers a carriage 12 with respect to respective ejecting member 7, and a second work position in which sector 32 is moved closer to axis 22 of drum 20 with respect to the first work position to prevent respective ejecting member 7 from performing the ejection stroke.

Wheel 31 of safety device 8 is located between the two plates of support 9 and cooperates with each carriage 12 fed along portion T of path P. Each track 10 of conveyor 5 comprises a top branch 54; a bottom branch (not shown) parallel to the top branch; and a curved portion 55, which extends parallel to portion T about axis 22, connects top branch 54 to the bottom branch (not shown), and extends along a peripheral portion of wheel 31.

In actual use, and with reference to Figure 2, carriages 12 are fed in direction D1 along top branch 54 of track 10 by the magnetic field acting on ferromagnetic core 16, and are fed along curved portion 55 of track 10 by wheel 31, which is connected mechanically to carriages 12. More specifically, along portion T, each carriage 12 is connected to a respective sector 32, and axles 13 of carriage 12 are engaged inside seats 36 of respective sector 32. In other words, each carriage 12 is fed forward by the magnetic field so as to time each carriage 12 with respect to a respective sector 32, and so that axles 13 of each carriage 12 are housed inside seats 36 of respective sector 32. Minor errors in the timing of carriage 12 and respective sector 32 are permitted, by the flared shape of seat 36 centering and correcting the position of carriage 12.

When a carriage 12 is connected to a respective sector 32 along portion T, pocket 15 of carriage 12 is aligned with a respective ejecting member 7, which rotates about axis 22 together with respective pocket 15, and is first moved towards pocket 15 by slide 27 controlled by positive cam 30, so that head 24 penetrates inside pocket 15 to expel and transfer group 2 on to a wrapping unit (not shown), and is then withdrawn into the rest position. Once group 2 is expelled, carriage 12 is fed by the magnetic field along the bottom branch (not shown) of track 10, while respective sector 32 is fed back on to top branch 54 to engage another carriage 12.

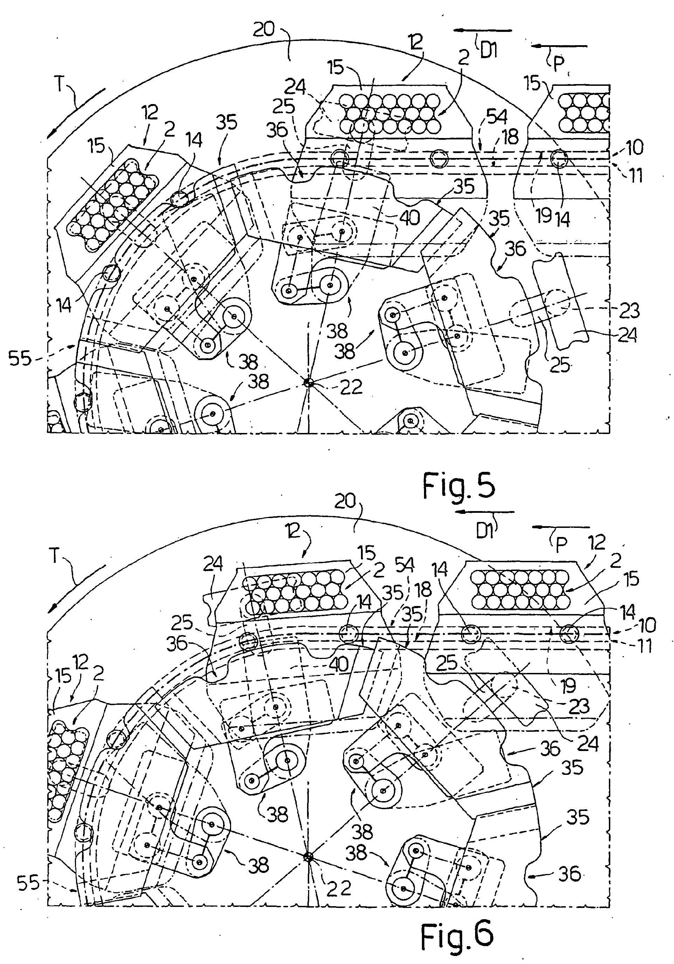

With reference to Figures 5 and 6, when a carriage 12 and respective sector 32 are connected out of time with each other, so that axles 13 fail to engage seats 36, axles 13 of carriage 12 are guided along portion 55 by positive cams 11, interfere with plates 33 of respective sector 32, and press sector 32 towards axis 22 into the second work position. The pressure exerted by axles 13 on edges 35 of the plates deforms articulated quadrilateral 38 (Figure 6) and rotates shaft 39, which moves intercepting member 40 into the work position. Intercepting member 40 remains in the work position along the whole of portion T, by the pressure exerted, along portion T, by carriage 12 on sector 32 opposing the pulling force of spring 41 tending to restore member 40 to the rest position. As a result, when slide 27 is moved by positive cam 30 to perform the ejection stroke of ejecting member 7, plate 25 is arrested by intercepting member 40, while slide 27 continues the ejection stroke in direction D2 and is detached from plate 25, and, at the return stroke, is connected once more to plate 25 by magnet M.

Safety device 8 thus provides for preventing any incorrect transfers which might damage pocket 15 or conveyor 5.

In a variation not shown, the conveyor comprises belts for selectively engaging carriages 12 in lieu of the linear motor. The operating principle of safety device 8 and ejecting device 6, however, remains unchanged, by being independent of the way in which the carriages are fed along top branch 54 of track 10.

## Claims

1. A unit for transferring articles, comprising a conveyor (5) with pockets (15) for feeding said articles (2) in a first direction (D1) along a given path (P), and an ejecting device (6) having at least one ejecting member (7) located along said path (P) and movable, in a second direction (D2) crosswise to the first direction (D1), between a rest position and a work position to effect an ejection stroke by which to eject said articles (2) from said pockets (15) along a portion (T) of the path (P); the unit being **characterized by** comprising a safety device (8) for determining, along said portion (T), the position of a pocket (15) with respect to said ejecting member (7), and for preventing said ejecting member (7) from being moved into said work position if the pocket (15) is not aligned with the ejecting member (7).

2. A unit as claimed in Claim 1, **characterized in that** said safety device (8) is a mechanical device.

3. A unit as claimed in Claim 1 or 2, **characterized in that** said conveyor (5) comprises a number of carriages (12), each of which supports a said pocket (15) and is movable along said path (P); the safety device (8) comprising at least one centering member (32) having a seat (36) for housing a respective carriage (12); and the pocket (15) of said carriage (12) being aligned with said ejection member (7) when the respective carriage (12) is housed in said seat (36).

4. A unit as claimed in Claim 3, **characterized in that** the safety device (8) comprises a deformable mechanism (37) for supporting the centering member (32), which is movable between a first work position in which it centers a respective carriage (12), and a second work position in which it arrests said ejecting member (7) in the rest position.

5. A unit as claimed in Claim 4, **characterized in that** the deformable mechanism comprises a spring (41) for keeping the centering member (32) in the first work position; the conveyor (5) comprising a track (10) for guiding the carriages (12) along the path (P); and the centering member (32) having elements (33) which interfere with each said carriage (12) when said carriage (12) is not in time with the centering member (32), so as to push the centering member (32) into the second work position in opposition to the spring (41) and deform said deformable mechanism (37).

6. A unit as claimed in Claim 5, **characterized in that** said seat (36) is formed in said elements (33).

7. A unit as claimed in Claim 5 or 6, **characterized in that** said deformable mechanism (37) comprises an intercepting member (40) movable between a rest position and a work position to arrest said ejecting member (7).

8. A unit as claimed in any one of Claims 1 to 7, **characterized in that** said ejecting device (6) comprises a drive member (27) and a connection between the drive member (27) and the ejecting member (7) to perform the ejection stroke of the ejecting member (7) in the second direction (D2); said connection being a selective connection; and the safety device (8) releasing the connection between the ejecting member (7) and the drive member (27) when said pocket (15) is misaligned with respect to said ejecting member (7).

9. A unit as claimed in Claim 8, **characterized in that** said connection is made by means of a magnet (M).

10. A unit as claimed in any one of Claims 3 to 9, **characterized in that** the ejecting device (6) has a further conveyor (20) comprising said ejecting member (7) and for feeding said ejecting member (7) along said portion (T); the safety device (8) being supported by said further conveyor (20).

11. A unit as claimed in Claim 10, **characterized in that** said centering member (32) is supported by a drum and substantially aligned with said ejecting member (7) in said second direction (D2).

12. A unit as claimed in Claim 10 or 11, **characterized in that** said further conveyor is a drum (20) rotating about an axis (22) parallel to said second direction (D2); the drum (20) supporting a given number of ejecting members (7) and an equal number of safety devices (8) for arresting respective ejecting members (7).

13. A method of transferring articles, and which comprises feeding said articles (2) in a first direction (D1) along a given path (P) by means of a conveyor (5) with pockets (15), and expelling an article (2) from a respective pocket (15) along a portion (T) of the path (P) by means of an ejecting device (6) comprising an ejecting member (7) located along said portion (T) and movable, in a second direction (D2) crosswise to the first direction (D1), between a work position and a rest position; the method being **characterized by** determining, along said portion (T), the position of a pocket (15) with respect to said ejecting member (7); and by preventing said ejecting member (7) from being moved into the work position, if the pocket (15) is not aligned with the ejecting member (7), by means of a safety device (8) located between the conveyor (5) and the ejecting device (6).

14. A method as claimed in Claim 13, **characterized by** feeding a number of carriages (12) successively along the path (P), each carriage (12) supporting a respective pocket (15); and by centering, along said portion (T), each carriage (12) with respect to the ejecting member (7) by means of a centering member (32) to align the pocket (15) of said carriage (12) with said ejecting member (7).

15. A method as claimed in Claim 14, **characterized in that** said carriage (12) engages a seat (36) of said centering member (32) to center the respective pocket (15) with respect to the ejecting member (7).

16. A method as claimed in Claim 15, **characterized in that** said carriage (12) produces a change in position of the centering member (32) when the carriage (12) fails to engage said seat (36) along said portion (T).

17. A method as claimed in Claim 16, **characterized by** transmitting said change in position of the centering member to an intercepting member (40) to prevent the ejecting member (7) from performing the ejection stroke.

18. A method as claimed in Claim 17, **characterized in that** said change in position is transmitted to said intercepting member by means of a fully mechanical mechanism (37).

19. A method as claimed in Claim 17 or 18, **characterized by** setting the intercepting member (40) to a rest position or a work position as a function of the position of the centering member (32).

20. A method as claimed in any one of Claims 13 to 19, **characterized by** performing the ejection stroke of the ejecting member (7) by means of a drive member (27) connected to the ejecting member (7); and by releasing the connection between the drive member (27) and the ejecting member (7) when said pocket (15) is not aligned with said ejecting member (7).

21. A method as claimed in Claim 20, **characterized by** feeding said ejecting member (7) and said safety device (8) parallel to said portion (T) by means of a further conveyor (20).

22. A method as claimed in Claim 21, **characterized in that** said further conveyor is a drum (20) rotating about an axis (22) parallel to said second direction (D2); the drum (20) supporting a given number of ejecting members (7) and an equal number of safety devices (8) for arresting respective ejecting members (7).

## Patentansprüche

1. Einheit zum Überführen von Gegenständen, umfassend einen Förderer (5) mit Taschen (15) zum Führen der Gegenstände bzw. Artikel (2) in einer ersten Richtung (D1) entlang eines gegebenen Pfads bzw. Wegs (P), und eine Auswurfvorrichtung (6), die wenigstens ein Auswurfglied (7) aufweist, das entlang des Pfads (P) angeordnet ist und in einer zweiten Richtung (D2) quer zur ersten Richtung (D1) zwischen einer Ruheposition und einer Arbeitsposition bewegbar ist, um einen Auswurfhub zu bewirken, um **dadurch** die Gegenstände (2) von den Taschen (15) entlang eines Abschnitts (T) des Pfads (P) auszuwerfen; wobei die Einheit **gekennzeichnet** ist, daß sie eine Sicherheitsvorrichtung (8) umfaßt, um entlang des Abschnitts (T) die Position einer Tasche (15) in bezug auf das Auswurfglied (7) zu bestimmen, und um das Auswurfglied (7) daran zu hindern, daß es in die Arbeitsposition bewegt ist, wenn die Tasche (15) nicht mit dem Auswurfglied (7) ausgerichtet ist.

2. Einheit nach Anspruch 1, **dadurch gekennzeichnet, daß** die Sicherheitsvorrichtung (8) eine mechanische Vorrichtung ist.

3. Einheit nach Anspruch 1 oder 2, **dadurch gekennzeichnet, daß** der Förderer (5) eine Anzahl von Schlitten bzw. Förderern (12) umfaßt, von welchen jeder eine derartige Tasche (15) unterstützt und entlang des Pfads (P) bewegbar ist; wobei die Sicherheitsvorrichtung (8) wenigstens ein Zentrierglied (32) umfaßt, das einen Sitz (36) zum Aufnehmen eines entsprechenden Schlittens (12) aufweist; und die Tasche (15) des Schlittens (12) mit dem Auswurfglied (7) ausgerichtet ist, wenn der entsprechende Schlitten (12) in dem Sitz (36) aufgenommen ist.

4. Einheit nach Anspruch 3, **dadurch gekennzeichnet, daß** die Sicherheitsvorrichtung (8) einen deformierbaren Mechanismus (37) zum Unterstützen bzw. Abstützen des Zentrierglieds (32) aufweist, welcher zwischen einer ersten Arbeitsposition, in welcher er einen entsprechenden Schlitten (12) zentriert, und einer zweiten Arbeitsposition bewegbar ist, in welcher er das Auswurfglied (7) in der Ruheposition anhält.

5. Einheit nach Anspruch 4, **dadurch gekennzeichnet, daß** der deformierbare Mechanismus eine Feder (41) umfaßt, um das Zentrierglied (32) in der ersten Arbeitsposition zu halten; wobei der Förderer (5) eine Bahn bzw. Spur (10) zum Führen der Schlitten (12) entlang des Pfads (P) umfaßt; und wobei das Zentrierglied (32) Elemente (33) aufweist, welche mit dem Schlitten (12) zusammenwirken, wenn der Schlitten (12) nicht mit dem Zentrierglied (32) gleichzeitig ist, um das Zentrierglied (32) in die zweite Arbeitsposition entgegen der Feder (41) zu drücken und den deformierbaren Mechanismus (37) zu deformieren.

6. Einheit nach Anspruch 5, **dadurch gekennzeichnet, daß** der Sitz (36) in den Elementen (33) gebildet ist.

7. Einheit nach Anspruch 5 oder 6, **dadurch gekennzeichnet, daß** der deformierbare Mechanismus (37) ein abfangendes bzw. Unterbrecherglied (40) umfaßt, das zwischen einer Ruheposition und einer Arbeitsposition bewegbar ist, um das Auswurfglied (7) anzuhalten.

8. Einheit nach einem der Ansprüche 1 bis 7, **dadurch gekennzeichnet, daß** die Auswurfvorrichtung (6) ein Antriebsglied (27) und eine Verbindung zwischen dem Antriebsglied (27) und dem Auswurfglied (7) umfaßt, um den Auswurfhub des Auswurfglieds (7) in der zweiten Richtung (D2) auszuführen; wobei die Verbindung eine selektive Verbindung ist; und wobei die Sicherheitsvorrichtung (8) die Verbindung zwischen dem Auswurfglied (7) und dem Antriebsglied (27) freigibt, wenn die Tasche (15) in bezug auf das Auswurfglied (7) fehlangeordnet bzw. fehlausgerichtet ist.

9. Einheit nach Anspruch 8, **dadurch gekennzeichnet, daß** die Verbindung mittels eines Magneten (M) hergestellt ist.

10. Einheit nach einem der Ansprüche 3 bis 9, **dadurch gekennzeichnet, daß** die Auswurfvorrichtung (6) einen weiteren Förderer (20) aufweist, umfassend das Auswurfglied (7) und zum Zuführen des Auswurfglieds (7) entlang des Abschnitts (T); wobei die Sicherheitsvorrichtung (8) durch den weiteren Förderer (20) unterstützt ist.

11. Einheit nach Anspruch 10, **dadurch gekennzeichnet, daß** das Zentrierglied (32) durch eine Trommel unterstützt ist und im wesentlichen mit dem Auswurfglied (7) in der zweiten Richtung (D2) ausgerichtet ist.

12. Einheit nach Anspruch 10 oder 11, **dadurch gekennzeichnet, daß** der weitere Förderer eine Trommel (20) ist, die um eine Achse (22) parallel zu der zweiten Richtung (D2) dreht; wobei die Trommel (20) eine gegebene Anzahl von Auswurfgliedern (7) und eine gleiche Anzahl von Sicherheitsvorrichtungen (8) zum Anhalten von entsprechenden Auswurfgliedern (7) aufweist.

13. Verfahren zum Überführen von Gegenständen, und welches ein Zuführen der Gegenstände bzw. Artikel (2) in einer ersten Richtung (D1) entlang eines gegebenen Pfads bzw. Wegs (P) mittels eines Förderers (5) mit Taschen (15), und ein Auswerfen eines Gegenstands (2) aus einer entsprechenden Tasche (15) entlang eines Abschnitts (T) des Pfads (P) mittels einer Auswurf- bzw. Austragseinrichtung (6) umfaßt, umfassend ein Auswurfglied (7), das entlang des Abschnitts (T) angeordnet ist und in einer zweiten Richtung (D2) quer zur ersten Richtung (D1) zwischen einer Arbeitsposition und einer Ruheposition bewegbar ist, wobei das Verfahren **gekennzeichnet ist durch** ein Bestimmen entlang des Abschnitts (T) der Position einer Tasche (15) in bezug auf das Auswurfglied (7); und **durch** ein Hindern des Auswurfglieds (7), daß es in die Arbeitsposition bewegt wird, wenn die Tasche (15) nicht mit dem Auswurfglied (7) ausgerichtet ist, mittels einer Sicherheitsvorrichtung (8), die zwischen dem Förderer (5) und der Auswurfvorrichtung (6) angeordnet ist.

14. Verfahren nach Anspruch 13, **gekennzeichnet durch** ein aufeinanderfolgendes Zuführen einer Anzahl von Schlitten (12) entlang des Pfads (P), wobei jeder Schlitten (12) eine entsprechende Tasche (15) unterstützt; und **durch** ein Zentrieren entlang des Abschnitts (T) jedes Schlittens (12) in bezug auf das Auswurfglied (7) mittels eines Zentrierglieds (32), um die Tasche (15) des Schlittens (12) mit dem Auswurfglied (7) auszurichten.

15. Verfahren nach Anspruch 14, **dadurch gekennzeichnet, daß** der Schlitten (12) einen Sitz (36) des Zentrierglieds (32) ergreift, um die entsprechende Tasche (15) in bezug auf das Auswurfglied (7) zu zentrieren.

16. Verfahren nach Anspruch 15, **dadurch gekennzeichnet, daß** der Schlitten (12) eine Positionsänderung des Zentrierglieds (32) erzeugt, wenn der Schlitten (12) beim Ergreifen des Sitzes (36) entlang des Abschnitts (T) versagt.

17. Verfahren nach Anspruch 16, **gekennzeichnet durch** ein Übertragen der Positionsänderung des Zentrierglieds auf ein abfangendes bzw. Unterbrechungsglied (40), um das Auswurfglied (7) am Durchführen des Auswurfhubs zu hindern.

18. Verfahren nach Anspruch 17, **dadurch gekennzeichnet, daß** die Positionsänderung auf das Unterbrechungsglied mittels eines vollständig mechanischen Mechanismus (37) übertragen bzw. übermittelt wird.

19. Verfahren nach Anspruch 17 oder 18, **gekennzeichnet durch** ein Festlegen bzw. Einstellen des Unterbrechungsglieds (40) auf eine Ruheposition oder eine Arbeitsposition als eine Funktion der Position des Zentrierglieds (32).

20. Verfahren nach einem der Ansprüche 13 bis 19, **gekennzeichnet durch** ein Ausführen des Auswurf- bzw. Austragshubs des Auswurfglieds (7) mittels eines Antriebsglieds (27), das mit dem Auswurfglied (7) verbunden ist; und **durch** ein Lösen der Verbindung zwischen dem Antriebsglied (27) und dem Auswurfglied (7), wenn die Tasche (15) nicht mit dem Auswurfglied (7) ausgerichtet ist.

21. Verfahren nach Anspruch 20, **gekennzeichnet durch** ein Zuführen des Auswurfglieds (7) und der Sicherheitsvorrichtung (8) parallel zu dem Abschnitt (T) mittels eines weiteren Förderers (20).

22. Verfahren nach Anspruch 21, **dadurch gekennzeichnet, daß** der weitere Förderer eine Trommel (20) ist, die um eine Achse (22) parallel zu der zweiten Richtung (D2) dreht; wobei die Trommel (20) eine gegebene Anzahl von Auswurfgliedern (7) und eine gleiche Anzahl von Sicherheitsvorrichtungen (8) zum Anhalten von entsprechenden Auswurfgliedern (7) aufweist.

## Revendications

1. Unité pour transférer des articles, comprenant un convoyeur (5) avec des poches (15) pour alimenter lesdits articles (2) dans une première direction (D1) le long d'une trajectoire (P) donnée, et un dispositif d'éjection (6) ayant au moins un élément d'éjection (7) situé le long de ladite trajectoire (P) et mobile dans une seconde direction (D2) transversalement par rapport à la première direction (D1), entre une position de repos et une position de travail pour effectuer une course d'éjection grâce à laquelle on éjecte lesdits articles (2) desdites poches (15) le long d'une partie (T) de la trajectoire (P) ; l'unité étant **caractérisée en ce qu'**elle comprend un dispositif de sécurité (8) pour déterminer, le long de ladite partie (T), la position d'une poche (15) par rapport audit élément d'éjection (7), et pour empêcher ledit élément d'éjection (7) d'être déplacé dans ladite position de travail si la poche (15) n'est pas alignée avec l'élément d'éjection (7).

2. Unité selon la revendication 1, **caractérisée en ce que** ledit dispositif de sécurité (8) est un dispositif mécanique.

3. Unité selon la revendication 1 ou 2, **caractérisée en ce que** ledit convoyeur (5) comprend un certain nombre de chariots (12), dont chacun supporte une desdites poches (15) et est mobile le long de ladite trajectoire (P) ; le dispositif de sécurité (8) comprenant au moins un élément de centrage (32) ayant un siège (36) pour loger un chariot (12) respectif ; et la poche (15) dudit chariot (12) étant aligné avec ledit élément d'éjection (7) lorsque le chariot (12) respectif est logé dans ledit siège (36).

4. Unité selon la revendication 3, **caractérisée en ce que** le dispositif de sécurité (8) comprend un mécanisme déformable (37) pour supporter l'élément de centrage (32), qui est mobile entre une première position de travail dans laquelle il centre le chariot (12) respectif, et une seconde position de travail dans laquelle il arrête ledit élément d'éjection (7) dans la position de repos.

5. Unité selon la revendication 4, **caractérisée en ce que** le mécanisme déformable comprend un ressort (41) pour maintenir l'élément de centrage (32) dans la première position de travail ; le convoyeur (5) comprenant un rail (10) pour guider les chariots (12) le long de la trajectoire (P) ; et l'élément de centrage (32) ayant des éléments (33) qui interfèrent avec chacun desdits chariots (12) lorsque ledit chariot (12) n'est pas synchrone avec l'élément de centrage (32), afin de pousser l'élément de centrage (32) dans la seconde position de travail en opposition au ressort (41) et déformer ledit mécanisme déformable (37).

6. Unité selon la revendication 5, **caractérisée en ce que** ledit siège (36) est formé dans lesdits éléments (33).

7. Unité selon la revendication 5 ou 6, **caractérisée en ce que** ledit mécanisme déformable (37) comprend un élément d'interception (40) mobile entre une position de repos et une position de travail pour arrêter ledit élément d'éjection (7).

8. Unité selon l'une quelconque des revendications 1 à 7, **caractérisée en ce que** ledit dispositif d'éjection (6) comprend un élément d'entraînement (27) et un raccordement entre l'élément d'entraînement (27) et l'élément d'éjection (7) pour réaliser la course d'éjection de l'élément d'éjection (7) dans la seconde direction (D2) ; ledit raccordement étant un raccordement sélectif ; et le dispositif de sécurité (8) débloquant le raccordement entre l'élément d'éjection (7) et l'élément d'entraînement (27) lorsque ladite poche (15) présente un défaut d'alignement par rapport audit élément d'éjection (7).

9. Unité selon la revendication 8, **caractérisée en ce que** ledit raccordement est réalisé au moyen d'un aimant (M).

10. Unité selon l'une quelconque des revendications 3 à 9, **caractérisée en ce que** le dispositif d'éjection (6) a un convoyeur supplémentaire (20) comprenant ledit élément d'éjection (7) pour alimenter ledit élément d'éjection (7) le long de ladite position (T) ; le dispositif de sécurité (8) étant supporté par ledit convoyeur supplémentaire (20).

11. Unité selon la revendication 10, **caractérisée en ce que** ledit élément de centrage (32) est supporté par un tambour et sensiblement aligné avec ledit élément d'éjection (7) dans ladite seconde direction (D2).

12. Unité selon la revendication 10 ou 11, **caractérisée en ce que** ledit convoyeur supplémentaire est un tambour (20) tournant autour d'un axe (22) parallèle à ladite seconde direction (D2) ; le tambour (20) supportant un nombre donné d'éléments d'éjection (7) et un nombre identique de dispositifs de sécurité (8) pour arrêter les éléments d'éjection (7) respectifs.

13. Procédé pour transférer des articles, et qui comprend les étapes consistant à alimenter lesdits articles (2) dans une première direction (D1) le long d'une trajectoire (P) donnée au moyen d'un convoyeur (5) avec des poches (15), et expulser un article (2) d'une poche (15) respective le long d'une partie (T) de la trajectoire (P) au moyen d'un dispositif d'éjection (6) comprenant un élément d'éjection (7) situé le long de ladite partie (T) et mobile, dans une seconde direction (T2) transversalement par rapport à la première direction (D1) entre une position de travail et une position de repos ; le procédé étant **caractérisé par** l'étape consistant à déterminer, le long de ladite partie (T), la position d'une poche (15) par rapport audit élément d'éjection (7) ; et par l'étape consistant à empêcher ledit élément d'éjection (7) d'être déplacé dans la position de travail, si la poche (15) n'est pas alignée avec l'élément d'éjection (7), au moyen d'un dispositif de sécurité (8) situé entre le convoyeur (5) et le dispositif d'éjection (6).

14. Procédé selon la revendication 13, **caractérisé par** l'étape consistant à alimenter un nombre de chariots (12) successivement le long de la trajectoire (P), chaque chariot (12) supportant une poche (15) respective ; et par l'étape consistant à centrer, le long de ladite partie (T) chaque chariot (12) par rapport à l'élément d'éjection (7) au moyen d'un élément de centrage (32) pour aligner la poche (15) dudit chariot (12) avec ledit élément d'éjection (7).

15. Procédé selon la revendication 14, **caractérisé en ce que** ledit chariot (12) met en prise un siège (36) dudit élément de centrage (32) pour centrer la poche respective (15) par rapport à l'élément d'éjection (7).

16. Procédé selon la revendication 15, **caractérisé en ce que** ledit chariot (12) produit un changement de position de l'élément de centrage (32) lorsque le chariot (12) n'arrive pas à mettre en prise ledit siège (36) le long de ladite partie (T).

17. Procédé selon la revendication 16, **caractérisé par** l'étape consistant à transmettre ledit changement de position de l'élément de centrage à un élément d'interception (40) pour empêcher l'élément d'éjection (7) de réaliser la course d'éjection.

18. Procédé selon la revendication 17, **caractérisé en ce que** ledit changement de position est transmis audit élément d'interception au moyen d'un mécanisme complètement mécanique (37).

19. Procédé selon la revendication 17 ou 18, **caractérisé par** l'étape consistant à régler l'élément d'interception (40) sur une position de repos ou une position de travail en fonction de la position de l'élément de centrage (32).

20. Procédé selon l'une quelconque des revendications 13 à 19, **caractérisé par** l'étape consistant à réaliser la course d'éjection de l'élément d'éjection (7) au moyen d'un élément d'entraînement (27) raccordé à l'élément d'éjection (7) ; et par l'étape consistant à débloquer le raccordement entre l'élément d'entraînement (27) et l'élément d'éjection (7) lorsque ladite poche (15) n'est pas alignée avec ledit élément d'éjection (7).

21. Procédé selon la revendication 20, **caractérisé par** l'étape consistant à alimenter ledit élément d'éjection (7) et ledit dispositif de sécurité (8) parallèle à ladite partie (T) au moyen d'un convoyeur supplémentaire (20).

22. Procédé selon la revendication 21, **caractérisé en ce que** ledit convoyeur supplémentaire est un tambour (20) tournant autour d'un axe (22) parallèle à ladite seconde direction (D2) ; le tambour (20) supportant un nombre donné d'éléments d'éjection (7) et un nombre identique de dispositifs de sécurité (8) pour arrêter les éléments d'éjection (7) respectifs.
